# EUROPEAN PATENT SPECIFICATION

(11) **EP 2 810 791 B1**
(45) Date of publication and mention of the grant of the patent: **25.07.2018**
(21) Application number: 14170761.2
(22) Date of filing: 02.06.2014
(51) Int. Cl.: B60C 9/00, D02G 3/48, B60C 9/04

(54) **Pneumatic tire and hybrid cord for such a pneumatic tire**
Luftreifen und Hybridcord für solch einen Luftreifen
Pneumatique et corde hybride pour un tel pneumatique

(30) Priority: 07.06.2013 US 201313912655
(43) Date of publication of application: 10.12.2014
(73) Proprietor: The Goodyear Tire & Rubber Company, Akron, Ohio 44316 (US)
(72) Inventor: Assaad, Mahmoud Cherif, Copley, OH Ohio 44321 (US); Westgate, Walter Kevin, Uniontown, OH Ohio 44685 (US); Olbrich, Ralph Joachim, D-63695 Glauburg (DE); Mayer, Daniel, D-63067 Offenbach am Main (DE); Woods, John, D-63456 Hanau Klein-Auheim (DE); Love, Nathan Whitney, Richmond, VA Virginia 23225 (US); Renken, Andreas, 1202 Geneva (CH)
(74) Representative: Kutsch, Bernd

(56) References cited:
- EP-A1- 2 233 318
- EP-A2- 1 745 945
- WO-A1-2011/077346

## Description

### Field of the Invention

The present invention is directed to a pneumatic tire. More specifically, the present invention is directed towards a pneumatic tire wherein a single carcass reinforcement layer comprises a hybrid cord.

### Background of the Invention

An overlay for pneumatic tires may utilize a hybrid cord which is formed of two different materials: a low initial modulus core yarn and high modulus wrap yarns. The selection of the yarns may be such that the "break point" of the cord, i. e. when the slope of the force versus elongation curve changes from a relatively low slope to a relatively high slope, occurs at an elongation between 2 percent and 3 percent elongation, with an ultimate cord break at just over 5 percent elongation.

Another overlay for pneumatic tires may utilize a hybrid cord of aramid and nylon twisted together, wherein the break point of the cord is at an elongation between 4 percent and 6 percent elongation, with an ultimate cord break at over 10 percent elongation. In an overlay, the hoop reinforcing effects of a strong cord are desired. However, the cord must have elongation properties to a degree to permit the tire to expand into a toroidal shape during tire molding.

In a conventional runflat pneumatic tire there are often used two carcass reinforcing plies and reinforcing wedge inserts in the tire sidewalls. The wedge inserts resist radial deflection of the pneumatic tire with a combination of compressive and bending stresses in both inflated, as well as uninflated conditions. A conventional runflat tire often experiences a net compressive load in the region of the sidewall closest to the road-contacting portion of the pneumatic tire. Additionally, the outer portions of the sidewall may experience tensile forces, while the inner portions of the sidewall undergo compression stresses during bending. The conventional runflat tire balances the necessary flexibility in the inflated state with the rigidity in the uninflated state by employing two reinforcing carcass plies. The axially outermost ply has cords that have a modulus of elasticity that increases with strain. The axially innermost ply has cords having a modulus that exceeds that of the outermost ply during normal loads in an inflated state. Thus, the innermost ply handles the majority of the load during normal operation, and the outermost ply does not equally contribute to the load carrying during normal operation. When the tire is operated in an uninflated state, the load is shifted from the axially innermost ply to the axially outermost ply and again the plies do not equally contribute to the load carrying. The outermost ply may not contribute to the overall rigidity of the tire sidewall during normal inflation operation.

Another conventional runflat tire may exhibit bending behavior of tire components to achieve improved comfort and handling performance, and also improved run-flat performance. This runflat pneumatic tire may have a single carcass ply, at least one belt ply disposed radially outward of the carcass ply in a crown portion of the tire, and at least one insert located adjacent the carcass ply in a sidewall portion. The insert may provide support for the pneumatic tire load to enable the tire to operate in underinflated conditions. The carcass ply comprises at least one composite cord formed of at least two first yarns twisted helically about at least one second yarn. The first yarns and the second yarn may have different modulus of elasticity, the first yarns having a modulus greater than the modulus of the second yarn.

In forming the composite cords for a conventional runflat tire, the number of first yarns is often less than ten while the number of second yarns is often less than five. Preferred ratios of first and second yarns are 2/1, 3/1, 2/2, 3/2, 2/3, 3/3, or 4/3.

EP-A-1 745 945 describes a composite cord in accordance with a preamble of claim 1 and a tire comprising such a composite cord.

### Definitions

"Annular" means formed like a ring.

"Axial" and "axially" are used herein to refer to lines or directions that are parallel to the axis of rotation of the tire.

"Belt structure" means at least one, preferably at least two annular layers or plies of parallel cords, woven or unwoven, underlying the tread, unanchored to the bead, and preferably having cords inclined respect to the equatorial plane of the tire. The belt structure may also include plies of parallel cords inclined at relatively low angles, acting as restricting layers.

"Cable" means a cord formed by twisting together two or more plied yarns.

"Carcass" means the tire structure apart from the belt structure, tread, undertread, and sidewall rubber over the plies, but including the beads.

"Chipper" refers to a narrow band of fabric or steel cords located in the bead area whose function is to reinforce the bead area and stabilize the radially inwardmost part of the sidewall.

"Circumferential" means lines or directions extending along the perimeter of the surface of the annular tire parallel to the Equatorial Plane (EP) and perpendicular to the axial direction

"Cord" means one of the reinforcement strands which a reinforcement structure of the tire may comprise.

"Cord angle" means the acute angle, left or right in a plan view of the tire, formed by a cord with respect to the equatorial plane. The "cord angle" is measured in a cured but uninflated tire.

"Crown" means that portion of the tire within the width limits of the tire tread.

"Denier" means the weight in grams per 9000 meters (unit for expressing linear density). Dtex means the weight in grams per 10,000 meters.

"Density" or "Linear Density" means weight per unit length.

"Fiber" is a unit of matter, either natural or man-made that forms the basic element of filaments. Characterized by having a length at least 100 times its diameter or width.

"Flipper" refers to a reinforcing fabric around the bead wire of a tore for strength and to tie the bead wire in the tire body.

"Inner" means toward the inside of the tire and "outer" means toward its exterior.

"LASE" is load at specified elongation.

"Lateral" means an axial direction.

"Lay length" means the distance at which a twisted filament or strand travels to make a 360 degree rotation about another filament or strand.

"Normal Load" means the specific design inflation pressure and load assigned by the appropriate standards organization for the service condition for the tire.

"Ply" means a cord-reinforced layer of rubber-coated radially deployed or otherwise parallel cords.

"Radial" and "radially" are used to mean directions radially toward or away from the axis of rotation of the tire.

"Tread" means a molded rubber component which, when bonded to a tire casing, includes that portion of the tire that comes into contact with the road when the tire is normally inflated and under normal load.

"Tread width" means the arc length of the tread surface in a plane including the axis of rotation of the tire.

"Yarn" is a generic term for a continuous strand of textile fibers or filaments. Yarn occurs in the following forms: 1) a number of fibers twisted together; 2) a number of filaments laid together without twist; 3) a number of filaments laid together with a degree of twist; 4) a single filament with or without twist (monofilament); 5) a narrow strip of material with or without twist.

### Summary of the Invention

The invention relates to a pneumatic tire in accordance with claim 4 and to a composite cord in accordance with claim 1.

Dependent claims refer to preferred embodiments of the invention.

In one aspect of the invention, a pneumatic tire includes a single carcass ply and at least one belt ply disposed radially outward of the carcass ply in a crown portion of the pneumatic tire. The carcass ply includes only one type of composite cord. The cord consists of one single aramid first yarn twisted helically about one single polyester second yarn. The first yarn and the second yarn have a different moduli of elasticity. The first yarn has a modulus greater than the modulus of the second yarn.

In accordance with another aspect of the present invention, the first yarn may have a linear density value in the range of 1100 dtex to 1350 dtex or 670 dtex to 1350 dtex.

In accordance with still another aspect of the present invention, the second yarn may nahev a linear density value in the range of 1350 dtex to 1500 dtex or 1100 dtex to 1500 dtex.

In accordance with yet another aspect of the present invention, the composite cord preferably has an end count per 2.54 cm (EPI) in the carcass ply in the range of 15 to 32 EPI (5.9 to 12.6 ends per cm) or 15 to 40 EPI (5.9 to 15.8 ends per cm).

In accordance with still another aspect of the present invention, the first yarn may have a linear density value of 1330 dtex.

In accordance with yet another aspect of the present invention, the second yarn may have a linear density value of 1440 detx.

### Brief Description of the Drawings

The invention will be described by way of example and with reference to the accompanying drawings in which:
FIG. 1 is a cross sectional view of an example tire for use with the present invention;
FIG. 2 is an example cord construction in accordance with the present invention; and

### Detailed Description of Examples of the Present Invention

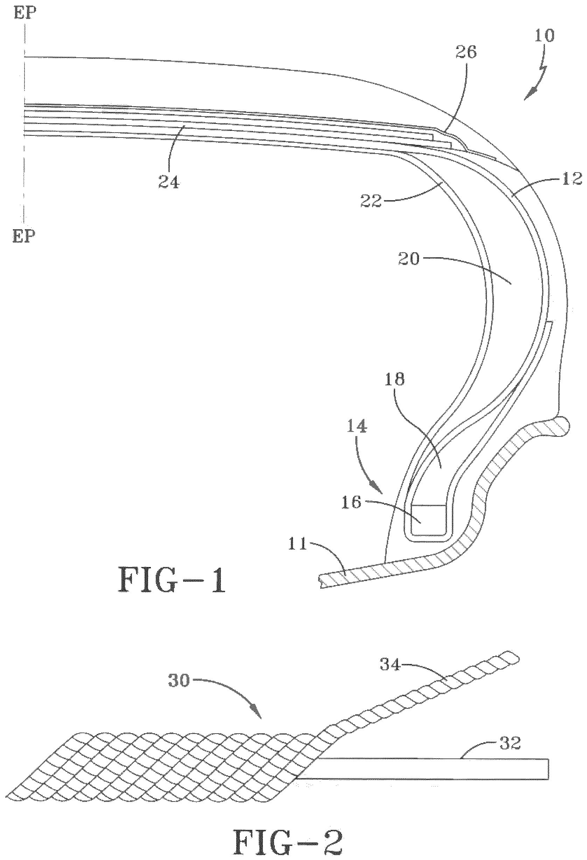

FIG. 1 is a cross-sectional view of an example pneumatic runflat tire 10, mounted on a tire rim 11, designed to be capable of continued operation during underinflated or deflated conditions. Only one half of the tire 10 is shown, it being understood that, conventionally, the other half is a mirror image of that which is illustrated. The example tire 10 has a single reinforcing ply 12 extending from one bead area 14 of the tire to an opposing bead area. The ends of the reinforcing ply 12 are turned axially inward to axially outward about bead cores 16 and bead apexes 18. The terminal ends of the reinforcing ply 12 extend past the radially outer ends of the bead apexes 18 enveloping the bead apexes 18.

Located in each sidewall region of the example tire 10 is a sidewall insert 20. The insert 20 may be located adjacent to the tire innerliner 22 or axially outward of the reinforcing ply 12. The insert 20 may be formed of elastomeric material and may extend from the crown area, preferably from radially inward of the belt structure 24, to radially inward of the outermost terminal end of the bead apexes 18, overlapping the bead apexes 18. The elastomeric material of the insert 20 may be selected to provide the tire with support during underinflated operation of the tire 10.

In the crown area of the example tire 10, a belt structure 24 is located radially outward of the carcass ply 12. The belt structure 24 has at least two inclined, crossed cord belt plies. The cords in the belt plies may be inclined with respect to the circumferential direction and the cords in directly adjacent plies may be inclined at similar, but opposing, angles to each other. Outward of the cross cord plies may be an overlay ply 26. The overlay ply 26 may have a width equal or greater than the maximum width of the crossed cord plies, encapsulating the crossed cord plies between the overlay ply 26 and the carcass reinforcing ply 12. The overlay ply 26 may be reinforced with cords inclined at angles of 15° or less relative to the equatorial plane (EP) of the example tire 10.

In accordance with the present invention, the carcass ply 12 is reinforced by a composite cord 30, as seen in FIG. 2. The cord 30 is a composite cord made of filament yarns of appropriate stress-strain characteristics to provide the example tire 10 with additional bending resistance when the tire operates in a runflat mode. As an example, the cord 30 is formed of a single lower modulus of elasticity polyester yarn 32 about which is twisted one higher modulus of elasticity aramid yarn 34. The construction allows the lower modulus component 32 of the cord 30 to work at relative low strain, i.e. the inflated tire mode, until the cord has reached an allowable elongation, from which point, only the higher modulus component 34 will be under tension, i.e. the runflat tire mode, and will limit the stretch of the cord. The modulus of elasticity is measured in accordance with ASTM D882.

The use of the monopoly construction of the present invention reduce tire weight, rolling resistance, manufacturing steps, and manufacturing time, such as in the mixing, calendering, tire building, and curing steps. The construction exhibits lower stiffness at small strain levels (for enhanced tire manufacturing) and higher stiffness at large strains (enhanced normal and flat conditions).

Furthermore, a relatively soft sidewall structure, under normal operating tire conditions, enhances compliancy (i.e., enveloping for comfort) via a very low modulus/strain ratio. When subjected to a sudden increase of strain (e.g. evasive maneuver, impact), a relatively stiff sidewall structure may enhance stiffness (i.e., stiffness for handling) via a very high modulus/strain ratio. A dual modulus cord (i.e., cord 30 in FIG. 2) for a carcass 12 in accordance with the present invention provides a better ride without compromising handling. The normal operating modulus may be equal to or less than a two ply PET construction to provide a softer ride and greater durability. Advantageously, the modulus may trend up drastically to stiffen up the sidewall/carcass for enhanced handling/cornering. Such a cord construction, as described above, may also allow the omission of an overlay, thereby reducing cost and weight. For example, removal of the overlay may reduce stiffness, but enhance enveloping. The "trending up" modulus provided by the cord 30 and carcass ply 12 of the present invention may, however, increase handling/cornering stiffness when subjected to higher elongations.

Such a "dual modulus" cord 30, with a load/deflection response (to an applied axial load) having two distinct slopes, may, for example, provide an inflection point (between the two slopes) occurring between 0.5 and 6 percent. Consequently, ride comfort may be enhanced while maintaining handling, which is counterintuitive to the conventional trade-off of these two tire performance characteristics.

The unique advantage is that under normal operating conditions, compliancy/handling of a tire 10 with a ply 12 comprising such cords 30 may be satisfied. However, when subjected to a bump, pothole, evasive maneuver, enveloping etc, the tire 10 may automatically stiffen to provide an appropriate response to maintain handling and control.

Possible reinforcing materials for either the high or low modulus of elasticity (measured in accordance with ASTM D882) yarns are aramid, polyethylene ketone (PK), polyphenylene-2,6-benzobisoxazole (PBO), rayon, nylon, polyester, polyamide, polyethylene terephthalate (PET), polyethylene naphthalate (PEN), and polyvinyl alcohol (PVA).

One example cord construction is (1100 to 1350dtex/1 aramid + 1350-1500dtex/1 polyester)/(9 to 11)Z/(0 to 2)Z/(9 to 11)S. The end count per 2.54 cm of the cord in a carcass ply 12 is preferably in the range of from 15 to 32 (5.9 to 12.6 ends per cm).

Another example cord construction is (670 to 1350dtex/1 aramid + 1100-1500dtex/1 polyester)/(9 to 14)Z + (9 to 14)Z/(9 to 14)S or (670 to 1350dtex/1 aramid + 1100-1500dtex/1 polyester)/(9 to 14)S + (9 to 14)Z/(9 to 14)S. The end count per 2.54 cm in a carcass ply 12 is preferably in the range of from 15 to 40 EPI (5.9 to 15.8 ends per cm).

Another example cord construction is (1200 to 1330 Denier/1 Kevlar + 1300 to 1440 Denier/1 PET)/(9 to 14)Z + (9 to 14)Z/(9 to 14)S or (1200 to 1330 Denier/1 Kevlar + 1300 to 1440 Denier/1 PET)/(9 to 14)S + (9 to 14)S/(9 to 14)Z. The end counts per 2.54 cm of these cords in a carcass ply 12 is preferably the range of from 15 to 40 EPI (5.9 to 15.8 ends per cm). Kevlar is Poly-paraphenylene terephtalamide (PPTA). In one example, the cord construction is (1200 Denier/1 Kevlar + 1300 Denier/1 PET)/(13.2)Z + (13.2)Z/(13.2)S or (1200 Denier/1 Kevlar + 1300 Denier/1 PET)/(13.2)S + (13.2)S/(13.2)Z.

Other example materials of the high modulus yarns may be aramid, PK, PVA, or PBO, while the low modulus yarns may be rayon, nylon, polyester, PET, or PEN. The final material selection may be based on the specific desired stress/strain characteristics of the cord 30. An important preferred requirement is that the wrap yarns have a modulus of elasticity greater than the core yarns. Thus, the wrap yarns may be aramid with a nylon core yarn.

In the example cord 30, each of the yarns 32, 34 has its component filaments twisted together a given number of turns per unit of length of the yarn 32, 34 (usually expressed in turns per inch (TPI)) and additionally the yarns 32, 34 are twisted together a given number of turns per unit of length of the cord 30. The direction of twist refers to the direction of slope of the spirals of a yarn or cord when it is held vertically. If the slope of the spirals conforms in direction to the slope of the letter "S", then the twist is called "S", or "left hand". If the slope of the spirals conforms in direction to the slope of the letter "Z", then the twist is called "Z", or "right hand". An "S" or "left hand" twist direction is understood to be an opposite direction from a "Z" or "right hand" twist. "Yarn twist" is understood to mean the twist imparted to a yarn before the yarn is incorporated into a cord, and "cord twist" is understood to mean the twist imparted to two or more yarns when they are twisted together with one another to form a cord. "dtex" is understood to mean the weight in grams of 10,000 meters of a yarn before the yarn has a twist imparted thereto.

## Claims

1. A composite cord consisting of one single aramid or Kevlar first yarn (34) twisted helically about one single polyester or PET second yarn (32), **characterized in that** the composite cord (30) has the cord construction:
(i) (1100 to 1350 dtex/1 aramid + 1350 to 1500 dtex/1 polyester)/(9 to 11)Z/(0 to 2)Z/(9 to 11)S; or
(ii) (1100 to 1350 dtex/1 aramid + 1350 to 1500 dtex/1 polyester)/(9 to 11)S/(0 to 2)S/(9 to 11)Z; or
(iii) (670 to 1350 dtex/1 aramid + 1100 to 1500 dtex/1 polyester)/(9 to 14)Z/(9 to 14)Z/(9 to 14)S; or
(iv) (670 to 1350 dtex/1 aramid + 1100 to 1500 dtex/1 polyester)/(9 to 14)S/(9 to 14)S/(9 to 14)S; or
(v) (1200 to 1330 Denier/1 Kevlar + 1300 to 1440 Denier/1 PET)/(9 to 14)Z/(9 to 14)Z/(9 to 14)S; or
(vi) (1200 to 1330 Denier/1 Kevlar + 1300 to 1440 Denier/1 PET)/(9 to 14)S/(9 to 14)S/(9 to 14)Z; or
(vii) (1200 Denier/1 Kevlar + 1300 Denier/1 PET)/(13.2)Z/(13.2)Z/(13.2)S; or
(viii) (1200 Denier/1 Kevlar + 1300 Denier/1 PET)/(13.2)S/13.2)S/ (13.2)Z;
wherein the turns are expressed in turns per 2.54cm.

2. The composite cord of claim 1 wherein the first yarn (34) has a modulus of elasticity greater than the modulus of elasticity of the second yarn (32).

3. Use of the composite cord in accordance with claim 1 or 2 in chipper or a flipper of a pneumatic tire.

4. A pneumatic tire comprising a single carcass ply (12) and at least one belt ply (24) disposed radially outward of the carcass ply (12) in a crown portion of the tire (10), the carcass ply (12) comprising one or only one type of composite cord (30), **characterized in that** the composite cord is a composite cord in accordance with claim 2.

5. The pneumatic tire as set forth in claim 4 wherein the composite cord has an end count per 2.54 cm (EPI) in the carcass ply in the range of from 15 to 40 EPI.

6. The pneumatic tire as set forth in claim 4 or 5 wherein the tire is a run-on-flat tire.

## Patentansprüche

1. Verbundmaterialkord, bestehend aus einem einzigen ersten Aramid- oder Kevlargarn (34), das schraubenförmig um ein einziges zweites Polyester- oder PET-Garn (32) verdrillt ist, **dadurch gekennzeichnet, dass** der Verbundmaterialkord (30) folgenden Kordaufbau aufweist:
(i) (1100 bis 1350 dtex/1 Aramid + 1350 bis 1500 dtex/1 Polyester)/(9 bis 11)Z/(0 bis 2)Z/(9 bis 11)S; oder
(ii) (1100 bis 1350 dtex/1 Aramid + 1350 bis 1500 dtex/1 Polyester)/(9 bis 11)S/(0 bis 2)S/(9 bis 11)Z; oder
(iii) (670 bis 1350 dtex/1 Aramid + 1100 bis 1500 dtex/1 Polyester)/(9 bis 14)Z/(9 bis 14)Z/(9 bis 14)S; oder
(iv) (670 bis 1350 dtex/1 Aramid + 1100 bis 1500 dtex/1 Polyester)/(9 bis 14)S/(9 bis 14)S/(9 bis 14)S; oder
(v) (1200 bis 1330 Denier/1 Kevlar + 1300 bis 1440 Denier/1 PET)/(9 bis 14)Z/(9 bis 14)Z/(9 bis 14)S; oder
(vi) (1200 bis 1330 Denier/1 Kevlar + 1300 bis 1440 Denier/1 PET)/(9 bis 14)S/(9 bis 14)S/(9 bis 14)Z; oder
(vii) (1200 Denier/1 Kevlar + 1300 Denier/1 PET)/(13,2)Z/(13,2)Z/(13,2)S; oder
(viii) (1200 Denier/1 Kevlar + 1300 Denier/1 PET)/(13,2)S/(13,2)S/(13,2)Z;
wobei die Windungen in Windungen pro 2,54 cm ausgedrückt sind.

2. Verbundmaterialkord nach Anspruch 1, wobei das erste Garn (34) einen Elastizitätsmodul aufweist, der größer als der Elastizitätsmodul des zweiten Garns (32) ist.

3. Anwendung des Verbundmaterialkords gemäß Anspruch 1 oder 2 in einem Wulstverstärker oder einer Wulstfahne eines Luftreifens.

4. Luftreifen, umfassend eine einzige Karkassenlage (12) und mindestens eine Gürtellage (24), die radial auswärts von der Karkassenlage (12) in einem Zenitbereich des Reifens (10) angeordnet ist, wobei die Karkassenlage (12) einen oder nur einen Typ von Verbundmaterialkord (30) umfasst, **dadurch gekennzeichnet, dass** der Verbundmaterialkord ein Verbundmaterialkord gemäß Anspruch 2 ist.

5. Luftreifen nach Anspruch 4, wobei der Verbundmaterialkord eine Anzahl von Enden pro 2,54 cm (EPI) in der Karkassenlage im Bereich von 15 bis 40 EPI aufweist.

6. Luftreifen nach Anspruch 4 oder 5, wobei der Reifen ein Reifen mit Notlaufeigenschaften ist.

## Revendications

1. Câblé composite constitué par un premier fil unique d'aramide ou de kevlar (34) soumis à une torsion hélicoïdale autour d'un second fil unique de polyester ou de PET (32), **caractérisé en ce que** le câblé composite (30) possède la composition de câblé suivante :
(i) (aramide 1100 à 1350 dtex/1 + polyester 1350 à 1500 dtex/1)/(9 à 11)Z/(0 à 2)Z/(9 à 11)S ; ou
(ii) (aramide 1100 à 1350 dtex/1 + polyester 1350 à 1500 dtex/1)/(9 à 11)S/(0 à 2)S/(9 à 11)Z ; ou
(iii) (aramide 670 à 1350 dtex/1 + polyester 1100 à 1500 dtex/1)/(9 à 14)Z/(9 à 14)Z/(9 à 14)S ; ou
(iv) (aramide 670 à 1350 dtex/1 + polyester 1100 à 1500 dtex/1)/(9 à 14)S/(9 à 14)S/(9 à 14)S ; ou
(v) (kevlar 1200 à 1330 denier/1 + PET 1300 à 1440 denier/1)/(9 à 14)Z/(9 à 14)Z/(9 à 14)S ; ou
(vi) (kevlar 1200 à 1330 denier/1 + PET 1300 à 1440 denier/1)/(9 à 14)S/(9 à 14)S/(9 à 14)Z ; ou
(vii) (kevlar 1200 denier/1 + PET 1300 denier/1)/(13,2)Z/(13,2)Z/(13,2)S ; ou
(viii) (kevlar 1200 denier/1 + PET 1300 denier/1)/(13,2)S/(13,2)s(13,2)Z;
dans lequel les tours sont exprimés en tours par 2,54 cm.

2. Câblé composite selon la revendication 1, dans lequel le premier fil (34) possède un module d'élasticité supérieur au module d'élasticité du second fil (32).

3. Utilisation du câblé composite selon la revendication 1 ou 2, dans une bandelette ou un renfort d'appui d'un bandage pneumatique.

4. Bandage pneumatique comprenant une nappe de carcasse unique (12) et au moins une nappe de ceinture (24) disposée à l'extérieur en direction radiale de la nappe de carcasse (12) dans une portion faisant office de sommet du bandage pneumatique (10), la nappe de carcasse (12) comprenant un type ou seulement un type de câblé composite (30), **caractérisé en ce que** le câblé composite est un câblé composite selon la revendication 2.

5. Bandage pneumatique selon la revendication 4, dans lequel le câblé composite possède un nombre de bouts par 2,54 cm (EPI) dans la nappe de carcasse dans la plage de 15 à 40 EPI.

6. Bandage pneumatique selon la revendication 4 ou 5, dans lequel le bandage pneumatique est un bandage pneumatique du type qui permet de rouler à plat.
